# EUROPEAN PATENT APPLICATION

(11) **EP 4 834 495 A1**
(43) Date of publication of application: **04.11.2026**
(21) Application number: 25173258.2
(22) Date of filing: 29.04.2025
(51) Int. Cl.: B07C 5/36, B65G 15/08, B65G 15/62

(54) **ARRANGEMENT AND METHOD FOR ANALYSING AND SORTING BULK MATERIAL AND METHOD OF MANUFACTURE OD AN ARRANGEMENT**

(71) Applicant: Swiss Recycling Technologies AG, 4628 Wolfwil (CH)
(72) Inventor: NÜTZI, Elias, 4628 Wolfwil (CH)
(74) Representative: Piticco, Lorena

(57) **Abstract**

An arrangement (1) for analysing and sorting bulk material comprises a feeder (2), a material transfer device (3), a conveyor device (4), an analysis device (5), and a sorting device (6). The conveyor device (4) is configured to transport the bulk material towards the analysis device (5) along a conveying direction (C) and comprises at least one conveyor belt (7) and at least one support device (8). The support device (8) is configured as a sliding device that comprises a trough (9) extending along a longitudinal direction (Ls) of the support device (8), whereby a groove (10) is formed by the conveyor belt (7) when the conveyor belt (7) slides over the support device (8) along the conveying direction (C), and wherein the bulk material is at least partially receivable in the groove (10).

## Description

### TECHNICAL FIELD

The present invention relates to an arrangement for analysing and sorting bulk material according to claim 1, to a method of sorting and analysing bulk material according to claim 14, and to a method of manufacturing an arrangement for analysing and sorting bulk material according to claim 15.

### PRIOR ART

Efficient recycling of bulk material comprising mixed materials, particularly aluminum and magnesium scrap, requires accurate identification and sorting based on chemical composition. Laser-Induced Breakdown Spectroscopy (LIBS) is a widely used technique for elemental analysis, capable of detecting both heavy and light elements. While existing LIBS-based systems offer valuable analysis capabilities, they suffer from practical limitations.

For instance, EP 3 586 984 A1 discloses a bulk material sorting and analysis method and equipment comprising a LIBS analysis system incorporated into a selector equipment comprising a bulk product infeed system employing a combination of vibratory feed chute and conveyor belt that aligns access to the incoming material to be analysed. The conveyor belt has a V-shaped cross-section configuration that is provided by two flat belts constructed at an angle such that together they form a V-shaped channel. The use of such a V-shaped conveyor belt system helps a more homogeneous flow of irregular material pieces when they pass in front of the laser system, since the use of a U-shaped or V-shaped chute creates a less well defined flight trajectory of the particles, which causes problems with a fixed focus configuration of the laser head with respect to the material pieces. However, such angled belts are mechanically cumbersome and add complexity to the system.

Accordingly, there remains a need for an improved arrangement for analysing and sorting bulk material that addresses such practical challenges.

### SUMMARY OF THE INVENTION

It is an object of the present invention to provide an improved arrangement and method for analysing and sorting bulk material. In particular, it is an object to provide an arrangement and method for analysing and sorting bulk material that has a simplified mechanical design and at the same time ensures reliable analyzing and sorting.

This object is achieved with an arrangement according to claim 1. In particular, an arrangement for analysing and sorting bulk material is provided, wherein the arrangement comprises a feeder, a material transfer device, a conveyor device, an analysis device, and a sorting device. The feeder is configured to receive the bulk material and to transport the bulk material towards the material transfer device. The material transfer device is configured to guide the bulk material onto the conveyor device. The conveyor device is configured to transport the bulk material towards the analysis device along a conveying direction. The conveyor device comprises at least one conveyor belt and at least one support device. The conveyor belt is configured to be supported by the support device along the conveying direction. The analysis device is configured to analyse at least one property of the bulk material and to generate at least one output signal based on the analysed property of the bulk material. The sorting device is configured to receive the at least one output signal and to sort the bulk material into at least two fractions based on the output signal and the analysed property. The support device is configured as a sliding device that comprises a trough extending along a longitudinal direction of the support device, whereby a groove is formed by the conveyor belt when the conveyor belt slides over the support device along the conveying direction, and wherein the bulk material is at least partially receivable in the groove.

The groove in the conveyor belt causes the bulk material to be aligned or centered within the groove. This arrangement allows for an improved analysis of the bulk material and consequently also for improved sorting. Unlike the prior art, in which two inclined belts have to be used, the arrangement according to the invention remains of a simple mechanical design.

The longitudinal direction of the support device preferably runs parallel to the conveying direction.

The trough is preferably understood as having a shape and/or structure that is concave, for instance resembling a "U" or "V" when seen in cross-section. Additionally or alternatively, it can be understood as a section of the support device that dips downward along a vertical direction V of the arrangement, resembling a depression or groove, basically symmetrical in cross section, and furthermore being elongated with respect to the conveying direction.

The groove is preferably understood as a depression that is elongated with respect to the conveying direction.

A shape of the groove is preferably defined by a shape of the trough.

For instance, if the shape of the trough when seen in cross-section is U-shaped, a shape of the groove in said region of the support device is preferably likewise U-shaped when seen in cross-section.

As such, it is preferred that explanations made with regard to a design such as the shape of the trough of the support device preferably likewise apply to a design such as the shape of the groove of the conveyor belt at least in said region of the support device and vice versa.

The groove being formed by the conveyor belt and being configured to at least partially receive the bulk material preferably serves the purpose of centring the bulk material on the conveyor belt, in particular in middle of the conveyor belt and aligning the bulk material preferably in a single file in the conveying direction.

The conveyor belt preferably comprises a bottom surface being directed towards the support device and an opposite top surface. The bottom surface preferably is a smooth surface and/or the top surface preferably comprises a friction lining. The friction lining preferably comprises protrusions or studs and/or is abrasion-resistant and/or is made of a different material than the conveyor belt. Additionally or alternatively, the conveyor belt is preferably configured such, that only the friction lining, in particular the protrusions, are contacting the bulk material when transported by the conveyor device along the conveying direction.

The trough, and thus preferably also the groove, at least regionally comprises sides that are in each case inclined at an angle such, that the bulk material slides towards a center of the groove being formed between the inclined sides.

This means that, unlike processes from the prior art that track the bulk material centrally on a flat conveyor belt, the arrangement according to the invention preferably has a trough and consequently a groove in the conveyor belt that is so steep that the bulk material particles placed on the conveyor belt roll or slide into the groove. An angle between the inclined sides of the trough, the trough angle, and thus preferably of the groove is preferably 120°or less.

The conveyor belt preferably is flexible. The groove is preferably formed by a flexible deformation of the conveyor belt. Additionally or alternatively, the conveyor belt preferably comprises or consists of at least one fabric material such as cotton and/or at least one plastic such as polyester, polyurethane or PVC. Additionally or alternatively, the conveyor belt preferably is reinforced along a longitudinal direction of the conveyor belt, for instance fiber reinforced such as comprising carbon fibers and/or Kevlar. Additionally or alternatively, the conveyor belt preferably lacks transverse struts extending along a transverse direction of the conveyor belt and/or lacking longitudinal struts extending along the longitudinal direction of the conveyor belt.

The reinforcement is preferably integrated into the conveyor belt. That is, the conveyor belt preferably lacks any longitudinal or transverse struts, or "lamellae", being attached to the conveyor belt, as these would be stretched or compressed by the trough.

As such, the conveyor belt is preferably configured to flexibly deform, whereby the groove is formed. Said flexible deformation i.e. formation of the groove is preferably generated by the trough of the support device. As such, it is preferred that in the absence of the trough, no groove is formed. In other words, the groove is preferably reversibly formable in the conveyor belt.

The conveyor belt being flexible preferably means that it can at least one of bend, deform, or flex without breaking. In particular, the conveyor belt is preferably able to bend in two directions, namely around a small pulley being located in an end region or at a discharge end, see further below, and/or along a transverse direction of conveyor belt, in order to pull up the flanks of the groove as steeply as possible.

The conveyor belt preferably comprises a tensile force at 1% elongation of at least 0.5 N/mm, such as about 1 N/mm.

The conveyor belt preferably comprises a total thickness along a depth direction of the conveyor belt being 5 millimeter or less, for instance 3 millimeter or less such as about 2.4 millimeter.

The conveyor belt preferably has a weight of 3 kg/m2 or less, such as about 2.6 kg/m2. In particular, the conveyor belt preferably is as heavy as possible so that it lies well on the support device. At the same time, however, it is preferably very flexible. A heavy conveyor belt is usually thick, and a flexible belt is usually thin. This physical contradiction can be overcome, for example, by a heavy friction lining.

Hence, on the one side the conveyor belt is preferably configured to withstand high mechanical stress but at the same time remains sufficiently flexible to form the groove.

The trough preferably extends continuously or in one or more sections along the support device when seen along the longitudinal direction of the support device. Additionally or alternatively, a clear width of the trough with respect to a transverse direction of the support device extending perpendicularly to the longitudinal direction of the support device is constant or varies when seen along the longitudinal direction of the support device. The clear width in a region of the material transfer device and/or in a region of the sorting device preferably is smaller than in a region between the material transfer device and the sorting device when seen along the longitudinal direction of the support device, thus preferably forming a steeper angle in cross section, i.e. a deeper trough. Additionally or alternatively, a depth of the trough with respect to a depth direction of the support device is constant or varies when seen along the longitudinal direction of the support device. The depth of the trough in a region of the material transfer device and/or in a region of the sorting device preferably is smaller than in a region between the material transfer device and the sorting device when seen along the longitudinal direction of the support device.

As mentioned earlier, the design of the trough preferably likewise applies to the design of the groove of the conveyor belt in said region of the trough. Hence, it is preferred that the groove extends continuously or in one or more sections along the conveyor belt when seen along the longitudinal direction of the conveyor belt. Additionally or alternatively, it is preferred that a clear width of the groove with respect to a transverse direction of the conveyor belt extending perpendicularly to the longitudinal direction of the conveyor belt is constant or varies when seen along the longitudinal direction of the conveyor belt. To this end it is particularly preferred that the clear width and/or the depth of the groove in a region of the material transfer device and/or in a region of the sorting device is smaller, than in a region between the material transfer device and the analysis device when seen along the longitudinal direction of the conveyor belt. Additionally or alternatively, a depth of the groove in the region of the material transfer is preferably smaller than a depth of the groove in the region of the sorting device.

Hence, the conveyor belt preferably has at least three zones, namely a loading zone, a transport zone, and a discharge zone. The loading zone preferably is in the region of the material transfer device and/or the transport zone preferably is in the region between the material transfer device and the analysis device and/or the discharge zone preferably is in the region of the sorting device. A depth of the groove is preferably individually adjusted in these three zones. For instance, both the loading zone and the discharge zone could be flat or essentially flat whereas a groove is formed in the transport zone, see also below.

The longitudinal direction of the conveyor belt preferably runs parallel to the longitudinal direction of the support device and/or the conveying direction. The transverse direction of the conveyor belt preferably runs parallel to the transverse direction of the support device.

Additionally or alternatively, it is preferred that a depth of the groove with respect to a vertical direction of the arrangement when seen in an installed state of the arrangement is constant or varies when seen along the longitudinal direction of the support device.

The installed state of the arrangement preferably refers to a positioning of the arrangement within its environment, wherein the arrangement is operable for analysing and sorting the bulk material. For example, in the installed state, the arrangement may be positioned on a surface such as the floor surface, with a vertical direction of the arrangement extending perpendicular to said surface and a horizontal direction extending perpendicular to the vertical direction. The longitudinal direction of the support device and/or the conveying direction are preferably parallel to the vertical direction of the arrangement.

The trough and/or the groove in the region of the material transfer device and/or in the region of the sorting device is preferably configured essentially flat or flat. "Essentially flat" preferably means that the trough and/or the groove has a shallow, flat bottom and slightly inclined sides with respect to a horizontal plane running parallel to the horizontal and vertical directions of the arrangement, the support device or the conveyor belt, respectively, as compared to a steeper trough or groove, respectively. That is, and as mentioned earlier, the trough and thus preferably also the conveyor belt preferably comprises at least regionally sides that are inclined. A trough and/or groove being "essentially flat" preferably means that the trough angle between the two sides is 120° or more.

However, it is also conceivable that the trough and/or the groove is flat in the region of the material transfer device and/or in the region of the sorting device. In this context, "flat" preferably means that the trough and/or groove extends in the horizontal plane that is parallel to the longitudinal and transverse directions of the support device, the conveyor belt or the arrangement, respectively.

In other words, the support device and/or the conveyor belt in the region of the material transfer device and/or in the region of the sorting device can be configured flat and, in particular, can be said to lack a trough and a groove, respectively.

The region of the material transfer device is preferably understood as the region where the material transfer device guides the bulk material onto the conveyor device. Preferably, this corresponds to an initial region of the conveyor device, in particular an initial region or so-called loading end of the support device and the conveyor belt with respect to the conveying direction and/or the longitudinal direction of the support device and/or the longitudinal direction of the conveyor belt. The region of the sorting device is preferably understood as the region where the sorting device sorts the bulk material fractions. Preferably, this corresponds to an end region or so-called discharge end of the conveyor device, in particular of the support device and of the conveyor belt with respect to the conveying direction and/or the longitudinal direction of the support device and/or the longitudinal direction of the conveyor belt.

A clear width of the trough with respect to the transverse direction of the support device and measured from "peak-to-peak" preferably is in the range of 100 to 300 millimeter, such as about 200 millimeter.

A depth of the trough with respect to a depth direction of the support device preferably is in the range of 10 millimeter to 200 millimeter, for instance 100 millimeter.

A clear width of the groove preferably equals or is smaller than the clear width of the trough with respect to the transverse direction of the conveyor belt and measured from "peak-to-peak". Additionally or alternatively, a depth of the groove with respect to the depth direction of the conveyor belt preferably equals or is smaller than the depth of the trough.

The arrangement preferably further comprises one or more adjusting elements that are configured to adjust a shape of the groove, in particular a clear width of the groove along the transverse direction of the conveyor belt and/or a depth of the groove along a vertical direction of the arrangement and/or the angle of inclination of the groove. The adjusting elements are preferably arranged at least partially in the trough and/or between the support device and a bottom surface of the conveyor belt. Additionally or alternatively, the adjusting elements are preferably wedges or rollers.

That is, the arrangement preferably comprises one or more adjusting elements that are configured to adjust a shape of the groove. In particular, the adjustment elements preferably serve the purpose of flattening the conveyor belt.

A variation of the clear width and/or depth of the groove of the conveyor belt can thus be achieved via the adjustment elements, while a clear width and/or depth of the trough of the support device can remain unchanged. For example, the trough can be designed with a constant clear width and constant depth over an entire length of the support device, and wherein a variation in the shape of the conveyor belt, for example a flat groove in the region of the material transfer device and/or in the region of the sorting device, is achieved solely by providing corresponding adjusting elements.

The adjustment elements can be wedges or rollers that are placed between the support device and the conveyor belt, in particular at least partially inside the trough of the support device.

The adjustment elements are preferably arranged in a region of the material transfer device and/or in a region of the sorting device.

The adjustment elements can be permanently arranged, i.e. fixed to the arrangement such as fixed to the support device, in particular the trough. However, it is likewise conceivable that the adjustment elements are removably arranged in the arrangement. For example, the wedges can be placed in or removed from the trough of the support device as required.

In the event of adjustment elements in the form of rollers, it is preferred that the adjustment elements are provided by rollers arranged in pairs, and wherein these rollers are preferably arranged in a certain geometry to one another, for example in a V-shape.

The trough is preferably formed in the support device, in particular by a deformation of the support device. Additionally or alternatively, the trough and the support device are preferably a single-piece element. Additionally or alternatively, the support device comprises or consists of at least one sheet metal, the sheet metal preferably comprising or consisting of at least one metal or metal alloy. That is, the trough is preferably an integral part of the support device, in particular a deformation of the support device. The trough is preferably formed by a deformation of the support device. The support device preferably comprises or consists of at least one sheet metal. Said sheet metal preferably comprises or consists of at least one metal or metal alloy. For instance, the support device can comprise or consist of at least one of steel, aluminium, copper, brass, titanium, tin, nickel, bronze, etc. Hence, the trough is preferably formed by deforming a sheet metal. Various formations are conceivable, such as deep drawing, bending, pressing, hydroforming or rolling as they are well-known in the art. As such, it is preferred that the trough is a permanent deformation of the support device. Additionally or alternatively, the support device can comprise or consist of at least one plastics and/or ceramics. For instance, the support device could comprise or consist of Teflon or comprise a Teflon coating. An advantage of Teflon are its self-lubricating properties. Ceramics would also be conceivable, as they are highly resistant to abrasion.

The conveyor device preferably comprises two or more conveyor belts being arranged parallel to one another with respect to the conveying direction. Additionally or alternatively, the support device preferably comprises two or more troughs being arranged parallel to one another with respect to the conveying direction. Additionally or alternatively, the conveyor device preferably comprises a single support device.

The conveyor device preferably comprises two or more conveyor belts and two or more troughs, wherein each conveyor belt is preferably assigned to one of the troughs. As such, a groove is preferably formed in and particularly preferably also by each conveyor belt as it slides along the support device along the conveying direction.

However, it should be noted that instead of providing two or more conveyor belts, it is likewise conceivable that only one single conveyor belt is provided, wherein two or more throughs are present such that two or more grooves are formed by the single conveyor belt.

Any statements made with regard to one conveyor belt, one trough, or one groove preferably likewise apply to two or more conveyor belts, two or more troughs or two or more grooves, respectively, and vice versa.

The two or more troughs can be configured the same or different from one another. For instance, a clear width and/or a depth of the troughs along the longitudinal direction can be the same or different from one another. As another example, the two or more troughs can comprise a same or different number and/or arrangement of adjusting elements, etc.

The conveyor device preferably comprises exactly one support device, such as exactly one sheet metal.

Hence, it is preferred that the two or more troughs are formed in a single support device, in particular in a single sheet metal. The support device can thus be seen as a single-piece element such as a sheet metal that is deformed, the deformations forming the troughs.

However, it is likewise conceivable that the support device is not a single-piece element but a multi-piece element such as two-piece element comprising at least a first support-device-part and a second support-device-part, wherein said support-device-parts are preferably arranged inclined with respect to one another, whereby the trough is formed. Furthermore, it is conceivable that an inclination of said support-device-parts is adjustable such that the trough angle is adjustable and/or such that the clear width of the trough and/or the depth of the trough is adjustable. For instance, the support-device-parts could be hingedly connected to one another wherein the hinge allows said adjustments. In other words, one or more troughs may be formed for instance by support-device-parts in the form of slabs of sheet metal connected by hinges. Each trough could be formed by two parallel slabs connected by a hinge. This creates a V-shaped support device with the hinge at the lowest point. In other words, an axis of the hinge preferably runs along the conveying direction. This design can be used along the entire length of the support device or, preferably, only in sections where a smaller trough angle is required to center and align the bulk material particles for instance in the middle of the conveyor belt. The hinges provide an easy way to continuously adjust the trough angle.

The conveyor device comprises at least one, preferably exactly one drive pulley being configured to drive the conveyor belt along the conveying direction. Additionally or alternatively, the conveyor device preferably comprises at least one, preferably exactly one, power device such as a motor being configured to power the drive pulley. Additionally or alternatively, the conveyor device preferably comprises at least one, preferably exactly one, tail pulley being arranged opposite to the drive pulley with respect to the conveying direction of the conveyor device and being configured to return the conveyor belt. Additionally or alternatively, the conveyor device preferably comprises at least one belt tensioning device being configured to tension the conveyor belt and preferably furthermore being configured to determine a tensioning and/or speed of the conveyor belt and to adjust the tension and/or speed of the conveyor belt accordingly.

The drive pully is preferably powered by the power device.

The drive pulley and preferably also the power device are preferably located in an initial region of the conveyor device, in particular in the initial region or at the loading end of the support device and the conveyor belt.

The belt tensioning device is preferably located in the initial region of the conveyor device, in particular in the initial region or at the loading end of the support device and the conveyor belt, as well.

The tail pulley preferably is located in the end region of the conveyor device, in particular in the end region or at the discharge end of the support device and of the conveyor belt.

However, it should be noted that these pulleys can be likewise arranged in the opposite manner, with the tail pulley being located in the initial region or at the loading end and the drive pulley being located in the end region of art the discharge end.

In any case, it is preferred that a diameter of the pulley being located in the end region or at the discharge end is small and/or in the region of 30 millimeter to 150 millimeter such as 50 millimeter and/or such that the conveyor belt is bent sharply around the pulley. As discussed in more detail below, this allows for an improved analysis of the bulk material with the analysis device, since the analysis device can be brought close to the end region or the discharge end, respectively. Since smaller pulleys increase belt flexural stress a conveyor belt being flexible as mentioned earlier is of advantage.

To this end it is particularly preferred that the conveyor device comprises exactly one drive pulley, exactly one power device, and exactly one tail pulley, in particular also in the case of two or more conveyor belts. That is, in the event of two or more conveyor belts it is preferred that these conveyor belts run over the same drive pulley and the same tail pulley, and wherein there is one common power device such as a motor that drives said single drive pulley.

However, in the event of two or more conveyor belts it is preferred that there are two or more belt tensioning devices such that each conveyor belt can be tensioned individually via its tensioning device. Each belt tensioning device is thus preferably configured to tension its conveyor belt and preferably also to determine a tensioning and/or a speed of its conveyor belt in order to adjust the tension and/or speed of its conveyor belt accordingly. This allows the two or more conveyor belts to slide along the support device at the same speed.

Statements made with regard to one belt tensioning device preferably likewise apply to two or more belt tensioning devices and vice versa.

The belt tensioning device preferably comprises at least one take-up pully that is configured to apply or adjust tension to the conveyor belt, in particular by pressing against the conveyor belt. Thus, the take-up pully preferably corresponds to a pressure roller. The belt tensioning device preferably furthermore comprises at least one idler roller that is configured to support the conveyor belt. The belt tensioning device preferably further comprises at least one tracking element that is configured to detect and/or monitor at least one of a tension, a speed or a longitudinal alignment of the conveyor belt. As such, the belt tensioning device preferably serves the purpose of preventing slippage or excessive stretching of the conveyor belt.

It should be noted that the conveyor device can comprise further idler rollers that are placed along the conveyor belt to support the conveyor belt and reduce friction. These rollers preferably help keeping the conveyor belt aligned and guide it along the conveying direction as well as in a return direction being opposite to the conveying direction.

The conveyor device can comprise further components such as at least one belt cleaning device that is configured to remove material buildup from the conveyor belt and preventing carryback. To this end it is preferred that the belt cleaning device corresponds to a belt cleaning device as it is known in the art. For instance, the belt cleaning device can be a so-called primary belt cleaning device being arranged in the end region or at the discharge end of the conveyor device in order to remove the bulk of the material that sticks to the conveyor belt after it has unloaded the material. Such a primary belt cleaning device can comprise a bladed scraper or wiper that directly contacts the conveyor belt and removes material before it transfers to the return side of the conveyor belt. Additionally or alternatively, the belt cleaning device can be a so-called secondary belt cleaning device that is arranged along the conveyor belt and preferably on the return side of the conveyor belt. Such a secondary belt cleaning device can comprise a bladed scraper, wiper, or rotating brushes, for instance.

However, other types of belt cleaning devices are likewise conceivable in addition or in the alternative to the belt cleaning devices just described. For instance, a belt cleaning device in the form of an air knife cleaner using high-pressure air to blow off any remaining dust or small particles from the conveyor belt surface and/or in the form of a water spray cleaner using water sprays to wash or rinse the conveyor belt can be provided, etc.

The support device preferably comprises an initial region, a middle region, and an end region. When seen along the longitudinal direction of the support device, the support device preferably defines a positive slope from the initial region toward the middle region of the support device and defines a negative slope from the middle region toward the end region of the support device. Additionally or alternatively, a height of the support device in the middle region is greater than a height of the support device in the initial region and/or a height of the end region with respect to a vertical direction of the arrangement.

That is, the support device is preferably higher in the middle region than in the initial and end regions. To this end it is particularly preferred that the support device at least in its middle region is configured higher than the drive pulley and the tail pulley. In other words, when viewed in longitudinal section, the support device can be seen as having a hump shape or the like.

The support device defining a positive slope preferably means that the support device extends upwards at an angle of inclination.

The support device defining a negative slope preferably means that the support device extends downwards at an angle of inclination.

Additionally or alternatively, the height of the support device in the middle region is preferably at least 1 %, more preferably at least 5 % larger than the height of the support device in the initial region and the end region of the support device. Additionally or alternatively, the height of the support device in the middle region is preferably at least 10, such as 15 millimeter or 50 millimeter or 100 millimeter, larger than the height of the support device in the initial region and/or in the end region of the support device. Again in other words, the transport zone of the conveyor belt is preferably higher with respect to the vertical direction than the loading zone and/or the discharge zone of the conveyor belt, such as at least 10, for instance 15 millimeter or 50 millimeter or 100 millimeter higher.

Such a design of the support device has the advantage that the conveyor belt, when sliding over the support device, can rest on the support device along its entire length even without a bulk material covering.

The trough of the support device preferably comprises one or more openings through which at least one fluid such as air and/or a lubricating fluid can be introduced into the trough and to a bottom surface of the conveyor belt. Additionally or alternatively, the trough preferably comprises at least one profiling structure in the conveying direction that is configured to center the conveyor belt within the trough. Additionally or alternatively, the arrangement preferably further comprises at least one fluid supply device being configured to supply at least one fluid such as air and/or a lubricating fluid to the support device. Additionally or alternatively, the arrangement preferably further comprises at least one vibration device being configured to vibrate the support device.

By supplying at least one fluid such as air and/or a lubricating fluid to the bottom surface of the conveyor belt, a sliding friction between the bottom surface of the conveyor belt and the support device can be reduced and mechanical impact of the material particles when loaded onto the belt by the material transfer device is minimized. As such, the conveyor belt can in a sense float on an air cushion or a lubricating film. Furthermore, contaminants such as sand and dust can be washed off.

The trough preferably comprises at least one profiling structure such as raised edges in the transporting direction that are configured to center the conveyor belt within the trough. For instance, said profiling structure such as the raised edges can be arranged in a V-shaped pattern, so that, when viewed along the longitudinal direction of the support device, two edges converge and meet at a common point. However, other shapes are also conceivable.

The vibration device being configured to vibrate the support device preferably serves the purpose of centering or longitudinally aligning the bulk material on the conveyor belt with respect to the trough.

The vibration device can be installed such that the whole support device vibrates or that only the section with the most lowest trough angle is excited. The excitations can, for example, be introduced by linear vibrators or by excentric rollers installed under the conveyor belt.

The analysis device preferably comprises at least one laser device, at least one spectrometer and a controller unit. The laser device is preferably configured to generate a laser beam that, when the laser beam is incident on the bulk material, produces an optical emission from the bulk material. Additionally or alternatively, the spectrometer is preferably configured to detect the optical emission from the bulk material and to generate at least one detection signal based on the optical emission and preferably being indicative of the chemical composition of the bulk material. Additionally or alternatively, the controller unit is preferably configured to receive the detection signal from the spectrometer and to generate the output signal based on the detection signal and at least one sorting criterion.

That is, the analysis device preferably is a so-called LIBS (laser induced breakdown spectroscopy) system as it is well-known in the art. The laser device preferably is configured to emit high-energy pulses configured to ablate part of the bulk material and to create a plasma. Conceivable types of laser devices are Nd:YAG lasers (Neodymium-doped Yttrium Aluminum Garnet), femtosecond lasers, or Excimer lasers, for instance. A wavelength of the laser beam is preferably chosen based on the bulk material to be analysed. For instance, in the event of a Nd:YAG laser the wavelength preferably is 1064 nm or 532 nm.

A spectral distribution, i.e. the intensity as a function of wavelength, of the optical emissions of the ablated bulk material is preferably analysed in a wavelength sensitive detector such as the spectrometer, whereby information on the spectral distribution can be obtained. Because the atomic and molecular components of the bulk material have characteristic spectra of optical emissions, the information provided by the spectrometer reveals the chemical composition of the ablated bulk material.

The laser device and the spectrometer may be arranged in a common housing or in separate housings.

The laser device and the spectrometer can be arranged on a same side with respect to the conveyor belt, for instance facing the bottom surface of the conveyor belt, or on different sides with respect to the conveyor belt, such as the laser device being facing the bottom surface of the conveyor belt and the spectrometer being facing the top surface of the conveyor belt, or vice versa.

In particular, the LIBS unit is preferably positioned underneath a trajectory of the ejected bulk material particles so that the laser focus can scan the lower surface of the particles.

Since the bulk material is arranged in the groove of the conveyor belt, the bulk material can be analysed particularly well by the analysis device, in particular irradiated particularly well by the laser beam. This applies in particular to long material pieces that are on the troughed section of the belt aligned in transport direction and therefore present a large surface area to be sampled by the laser beam.

The analysis device preferably further comprises a controller unit being in connection with the spectrometer and the sorting device and being configured to receive the detection signal from the spectrometer, to generate the output signal based on the detection signal and at least one sorting criterion, and to operate the sorting device based on the output signal.

To this end it is particularly preferred that the output signal is associated, in particular compared, with at least one reference signal being indicative of the sorting criterion. The reference signal can be obtained from reference measurements on reference bulk material, for instance.

The at least one sorting criterion preferably is at least one of:
- an elemental composition, wherein one or more elements in the bulk material are identified and preferably quantified,
- emission spectral lines of the optical emission, wherein characteristic wavelengths emitted by the bulk material are identified, or
- a signal intensity of the optical emission, wherein the intensities associated with the emission peaks of the bulk material are used to determine or estimate a concentration of elements of the bulk material.

The sorting device preferably comprises nozzles that are configured to eject a fluid to impart an impulse on the bulk material to discharge the bulk material from the conveyor belt. The sorting device is preferably configured to supply an amount of fluid to the nozzles depending on a property of the bulk material, in particular a size of the bulk material. Additionally or alternatively, the sorting device is preferably configured to activate one or more nozzles based on a property of the bulk material, in particular a size and/or a mass of individual bulk material particles.

The sorting device preferably comprises or is in connection with a fluid supply device comprising at least one fluid such as air.

The sorting device preferably comprises nozzles that are configured to eject the fluid in dependence of the output signal being received by the sorting device. The fluid preferably is pressurized air.

Preferably, the sorting device comprises a plurality of nozzles provided as a nozzle bar. The nozzles or the nozzle bar are preferably arranged in the previously mentioned region of the sorting device, i.e. in a vicinity of the end region or the discharge end of the conveyor device.

In the case of two or more conveyor belts, it is preferred that the sorting device includes two or more correspondingly arranged nozzle bars, wherein each nozzle bar ejects the bulk material of the corresponding conveyor belt.

The sorting device is preferably also configured to activate and/or control the nozzles based on one or more characteristics of the bulk material, such as a size of the bulk material. For example, a certain number of nozzles can be opened or kept closed and/or an amount of compressed air to be ejected can be adjusted based on a detected size of the bulk material.

As mentioned earlier, the nozzle bar is preferably controlled based on the size of the bulk material. To this end it is preferred that a pulsed laser is provided, which is configured to vaporize a track of small pits from the bulk material flying over it. From the length of the track, information about the length of the bulk material can be obtained. Additional sensors being configured to determine a shape of the bulk material, for instance cameras, could be provided.

The bulk material preferably comprises or consists of at least one metal compound and/or metal alloy. The metal compound or metal alloy preferably comprises a light metal such as aluminium (Al), magnesium (Mg), titanium (Ti), lithium (Li), beryllium (Be).

The bulk material preferably originates from scrap metal.

Hence, the sorting of the bulk material into at least two fractions preferably corresponds to a sorting of the bulk material according to at least one quality difference of the bulk material, for instance into a first fraction comprising a magnesium alloy and/or aluminium alloy and a second fraction comprising e.g. pure aluminium.

To this end it is preferred that the bulk material prior to being delivered to the feeder has already been pre-treated, for example sieved. A mesh size of the sieve that the bulk material has passed through is, for example, between 10-30, 30-90 or 50-150 millimeter.

The feeder preferably is a vibration feeder and/or is configured to spread the bulk material evenly in a single particle layer. Additionally or alternatively, the material transfer device is preferably inclined downwards when seen along the conveying direction and/or comprises at least one groove configured to guide the bulk material from an upper portion of the material transfer device to a lower portion of the material transfer device. Additionally or alternatively, the material transfer device is preferably configured to guide the bulk material onto the conveyor device such that a horizontal velocity of the bulk material particles equals to the speed of the conveyor belt.

Additionally or alternatively, the arrangement preferably further comprises at least one collection device being configured to receive the at least two fractions of the sorted bulk material.

In the event of two or more conveyor belts it is preferred that the material transfer device comprises two or more channels, wherein each channel preferably guides the bulk material onto a corresponding conveyor belt.

The groove of the conveyor belt can have various shapes, such as a U- or V-shape.

The collection device is preferably arranged and configured such as to collect the fractions of the sorted bulk material separately. For instance, the collection device can comprise at least two bins, and wherein each bin receives and thereby collects one of the fractions of the bulk material. As an example, and as mentioned earlier, the sorting device can be configured to eject a fluid to impart an impulse on the bulk material to discharge the bulk material from the conveyor belt and into the collection device, in particular into the bins of the collector device.

However, it is likewise conceivable that the sorted bulk material is not collected by a collection device but by other means, for instance by at least two further conveyors.

In another aspect, a method of sorting and analysing bulk material, preferably via the arrangement as described above, is provided. The method comprises the steps of i) supplying bulk material to a feeder being configured to receive the bulk material and transporting the bulk material towards a material transfer device via the feeder, ii) guiding the bulk material onto a conveyor device via the material transfer device, iii) transporting the bulk material towards an analysis device along a conveying direction via the conveyor device, wherein the conveyor device comprises at least one conveyor belt and at least one support device, and wherein the conveyor belt is sliding along the support device along the conveying direction, iv) analysing at least one property of the bulk material and generating at least one output signal based on the analysed property of the bulk material via an analysis device, and v) sorting the bulk material into at least two fractions based on the output signal and the analysed property via at least one sorting device. The support device comprises a trough extending along a longitudinal direction of the support device, whereby a groove is formed by the conveyor belt when the conveyor belt slides over the support device along the conveying direction, and wherein the bulk material is at least partially received in the groove.

Any statements made herein regarding the arrangement for analysing and sorting bulk material preferably likewise apply to the method of sorting and analysing bulk material and vice versa.

Since the bulk material is at least partially received in the groove, it is preferably centered in the groove.

The conveyor device is preferably configured to slide the conveyor belt over the support device and along the conveying direction at a speed of 2 m/s or more.

In another aspect, a method of manufacturing an arrangement for analysing and sorting bulk material, preferably the arrangement as described above, is provided. The method comprises the steps of i) providing a feeder, ii) providing a material transfer device, iii) providing a conveyor device, iv) providing an analysis device, and v) providing a sorting device. The feeder is configured to receive the bulk material and to transport the bulk material towards the material transfer device. The material transfer device is configured to guide the bulk material onto the conveyor device. The conveyor device is configured to transport the bulk material towards the analysis device along a conveying direction. The conveyor device comprises at least one conveyor belt and at least one support device. The conveyor belt is configured to slide along the support device along the conveying direction. The analysis device is configured to analyse at least one property of the bulk material and to generate at least one output signal based on the analysed property of the bulk material. The sorting device is configured to receive the at least one output signal and to sort the bulk material into at least two fractions based on the output signal and the analysed property. The support device comprises a trough extending along a longitudinal direction of the support device, whereby a groove is formed by the conveyor belt when the conveyor belt slides over the support device along the conveying direction, and wherein the bulk material is at least partially receivable in the groove.

Any statements made herein regarding the arrangement for analysing and sorting bulk material and/or the method of sorting and analysing bulk material preferably likewise apply to the method of manufacturing an arrangement for analysing and sorting bulk material and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of an arrangement for analysing and sorting bulk material according to the invention;
- Fig. 2: shows a sectional view of the arrangement according to figure 1;
- Fig. 3: shows a partial sectional view of a support device and a conveyor belt of the arrangement according to figure 1;
- Fig. 4: shows another partial sectional view of the support device and the conveyor belt of the arrangement according to figure 1;
- Fig. 5: shows a partial sectional view of an analysis device of the arrangement according to figure 1.

### DESCRIPTION OF PREFERRED EMBODIMENTS

Aspects of the invention are now illustrated with reference to the figures.

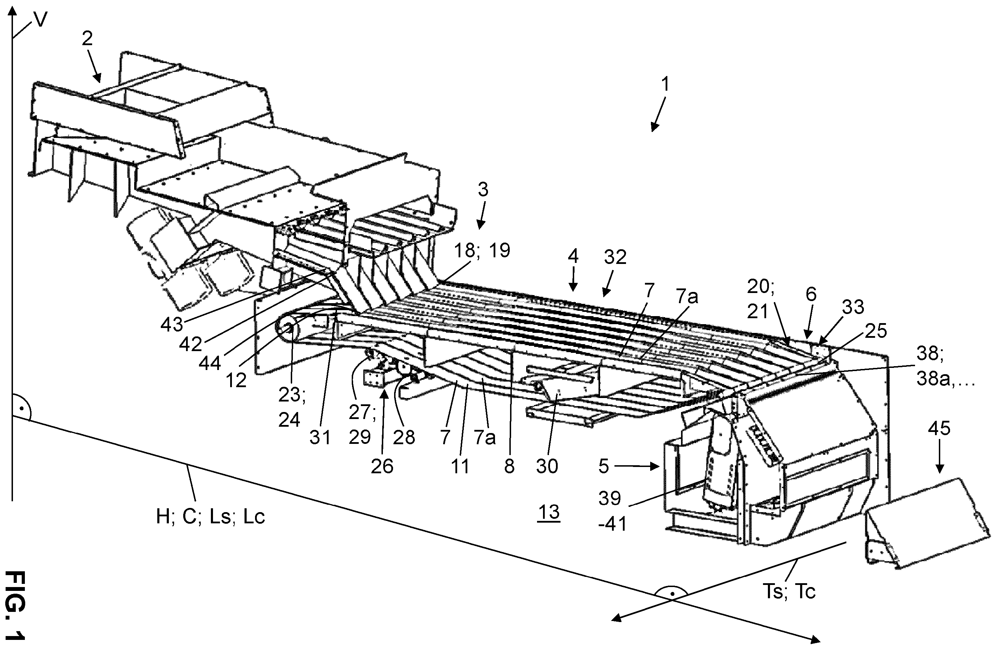

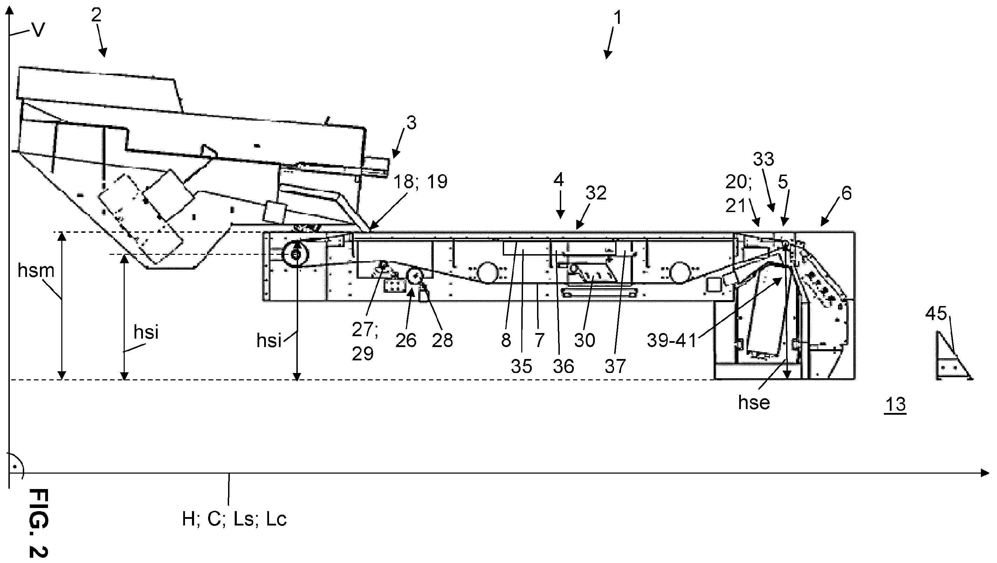

As best seen in figures 1 and 2, the arrangement 1 for analysing and sorting bulk material comprises a feeder 2, a material transfer device 3, a conveyor device 4, an analysis device 5, and a sorting device 6. The feeder 2 is configured to receive the bulk material and to transport the bulk material towards the material transfer device 3. The material transfer device 3 is configured to guide the bulk material onto the conveyor device 4. The conveyor device 4 is configured to transport the bulk material towards the analysis device 5 along a conveying direction C. The material transfer device 3 is inclined downwards when seen along the conveying direction C and comprises at least one groove 42 configured to guide the bulk material from an upper portion 43 of the material transfer device 3 to a lower portion 44 of the material transfer device 3. The conveyor device 4 comprises at least one conveyor belt 7 and at least one support device 8. The conveyor belt 7 is configured to be supported by the support device 8 along the conveying direction C. The analysis device 5 is configured to analyse at least one property of the bulk material and to generate at least one output signal based on the analysed property of the bulk material. The sorting device 6 is configured to receive the at least one output signal and to sort the bulk material into at least two fractions based on the output signal and the analysed property.

A region of material transfer device corresponds here to an initial region 18 of the conveyor device 4, in particular to an initial region or so-called loading end 19 of the support device 8 and the conveyor belt 7 with respect to the conveying direction C and the longitudinal direction Ls of the support device 8 and a longitudinal direction Lc of the conveyor belt 7. A region of the sorting device 6 corresponds here to an end region 20 or so-called discharge end 21 of the conveyor device 4. The longitudinal direction Lc of the conveyor belt 7 runs parallel to the longitudinal direction Ls of the support device 8 and the conveying direction C.

As follows from figures 1 and 2, the conveyor device 4 further comprises one drive pulley 23 being configured to drive the conveyor belt 7 along the conveying direction C, one power device 24 being configured to power the drive pulley 23, one tail pulley being 25 arranged opposite to the drive pulley 23 with respect to the conveying direction C of the conveyor device 4 and being configured to return the conveyor belt 7, and several belt tensioning devices 26 being configured to tension the conveyor belts 7 and to determine a tensioning and speed of the conveyor belts 7 and to adjust the tension and speed of the conveyor belts 7 accordingly. That is, since there are several conveyor belts there are several belt tensioning devices as well, such that each conveyor belt can be tensioned individually via its tensioning device.

Each belt tensioning device 26 comprises a take-up pully 27 that is configured to apply or adjust tension to the conveyor belt. The belt tensioning device furthermore comprises an idler roller 28 that is configured to support the conveyor belt. The belt tensioning device further comprises a tracking element 29 that is configured to detect and/or monitor at least one of a tension, a speed or a longitudinal alignment of the conveyor belt. The conveyor device further comprises a belt cleaning device 30 that is configured to remove material buildup from the conveyor belt and preventing carryback.

As indicated in figure 2, the support device 8 comprises an initial region 31, a middle region 32, and an end region 33. When seen along the longitudinal direction Ls of the support device 8, the support device 8 defines a positive slope from the initial region 31 toward the middle region 32 of the support device 8 and defines a negative slope from the middle region 32 toward the end region 33 of the support device 8, Moreover, a height hsm of the support device 8 in the middle region 32 is greater than a height hsi of the support device 8 in the initial region 31 and a height hse of the end region 33 with respect to the vertical direction V of the arrangement 1.

In addition, the trough 9 of the support device 8 comprises openings through which at least one fluid such as air or a lubricating fluid can be introduced into the trough 9 and to a bottom surface 11 of the conveyor belt 7 and the arrangement 1 comprises a fluid supply device 36 being configured to supply the fluid to the support device 8. Furthermore, the trough 9 comprises a profiling structure 35 in the conveying direction C that is configured to center the conveyor belt 7 within the trough 9 and the arrangement 1 comprises a vibration device 37 being configured to vibrate the support device 8.

The conveyor belt 7 comprises a bottom surface 11 being directed towards the support device 8 and an opposite top surface 12. The bottom surface 11 is a smooth surface and the top surface 12 comprises a friction lining (not depicted). The conveyor belt 7 is flexible, with the groove 10 being formed by a flexible deformation of the conveyor belt 7.

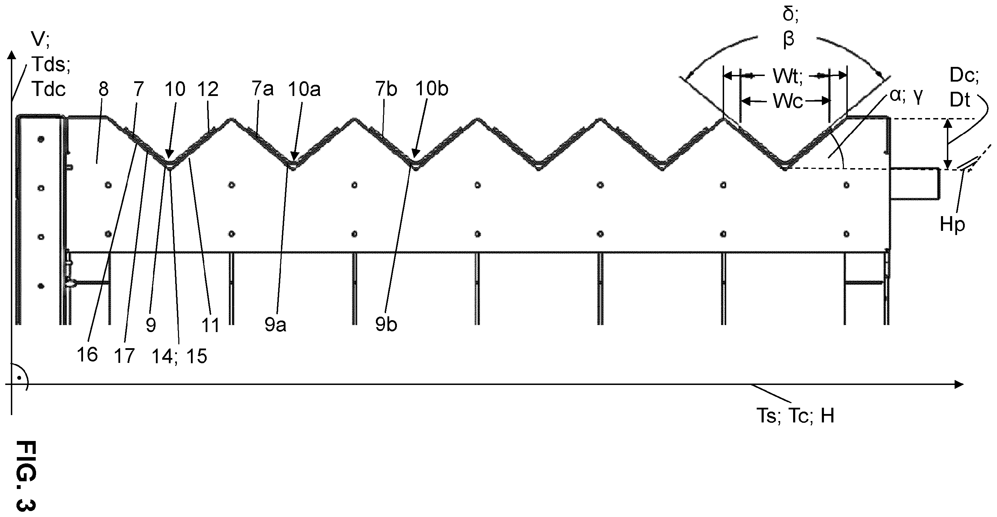

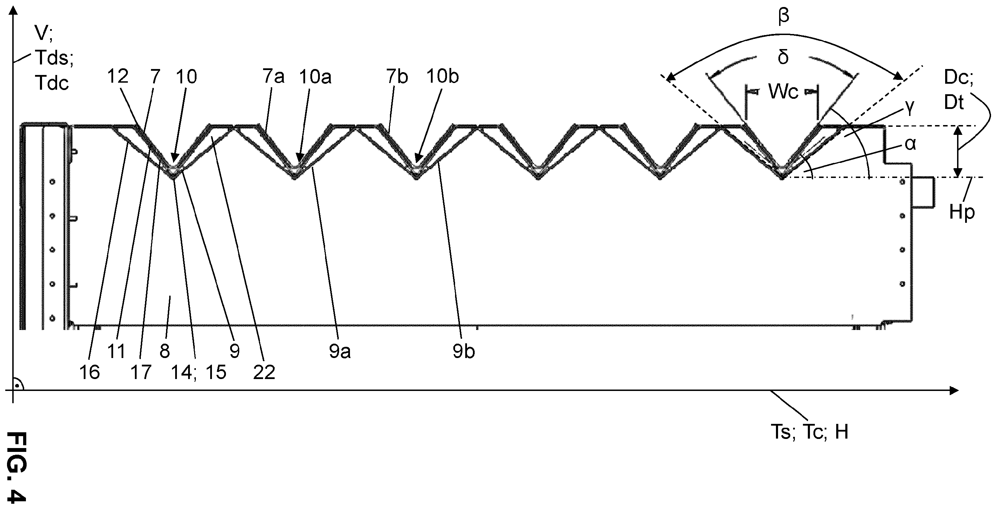

As best seen in figures 3 and 4, the support device 8 is configured as a sliding device that comprises a trough 9 extending along a longitudinal direction Ls of the support device 8, whereby a groove 10 is formed by the conveyor belt 7 when the conveyor belt 7 slides over the support device 8 along the conveying direction C, and wherein the bulk material is at least partially receivable in the groove 10. As furthermore follows from these figures, the trough has a shape and/or structure that is concave, resembling a "U" or "V" when seen in cross-section.

In figures 3 and 4, the trough and thus the groove are steep, wherein the sides 16; 17 extend inclined from a bottom 14; 15 of the trough and the groove, respectively. Said sides 16; 17 are also inclined with respect to a horizontal plane Hp running parallel to the horizontal and vertical directions H; V of the arrangement.

In particular, the trough comprises sides that are in each case inclined at an angle α such, that the bulk material slides towards a center of the groove being formed between the inclined sides. In figure 3, an angle β between the inclined sides of the trough, the trough angle, is 100°. A clear width of the trough Wt and a clear width of the groove Wc along a transverse direction of the support device Ts and along a transverse direction Tc of the conveyor belt is 144 millimeter. The transverse direction Tc of the conveyor belt runs parallel to a transverse direction Ts of the support device.

Figure 4 depicts another section of the arrangement, where the trough angle β between the inclined sides of the trough is still 100°, but an angle δ of the groove is 77° and an angle γ of one side of the groove with respect to transverse directions Ts; Tc being 38.5 °. The clear width of the trough Wt is still 144 centimeters, but the clear width of the groove Wc along the transverse directions Ts; Tc of the support device and of the conveyor belt is 118 millimeter. Said different shape is achieved because of adjusting elements 22 being arranged in the troughs 9, 9a, ...

A depth Dt of the trough 9 with respect to a depth direction Tds of the support device 8 remains constant when seen along the longitudinal direction Ls of the support device 8.

Likewise, a depth Dc of the groove10 with respect to a vertical direction V of the arrangement when seen in an installed state of the arrangement remains constant when seen along the longitudinal direction Ls of the support device.

The installed state of the arrangement refers to a positioning of the arrangement within its environment, wherein the arrangement is operable for analysing and sorting the bulk material. For example, in the installed state as depicted in the figures, the arrangement is positioned on a surface 13 such as the floor surface, with a vertical direction V of the arrangement extending perpendicular to said surface and a horizontal direction H extending perpendicular to the vertical direction. The longitudinal direction Ls of the support device and the conveying direction C are parallel to the vertical direction V of the arrangement.

The arrangement 1 further comprises adjusting elements 22 that are configured to adjust a shape of the groove 10, in particular the clear width Wc of the groove 10 along the transverse direction Tc of the conveyor belt 7 and the depth Dc of the groove 10 along the vertical direction V of the arrangement 1, see figure 4. The adjusting elements 22 are arranged at least partially in the trough 9 and between the support device 8 and the bottom surface 11 of the conveyor belt.

As furthermore follows from figures 3 and 4, the trough 9 is formed in the support device 8, in particular by a deformation of the support device, wherein the trough 9 and the support device 8 are a single-piece element.

Moreover, in the depicted example, the conveyor device 4 comprises several conveyor belts 7, 7a, ... being arranged parallel to one another with respect to the conveying direction C, and the support device 8 comprises several troughs 9, 9a, ... being arranged parallel to one another with respect to the conveying direction C. Consequently, several grooves 10, 10a, ... are formed by the conveyor belts 7, 7a, ... Nevertheless, the conveyor device 4 comprises a single support device 8.

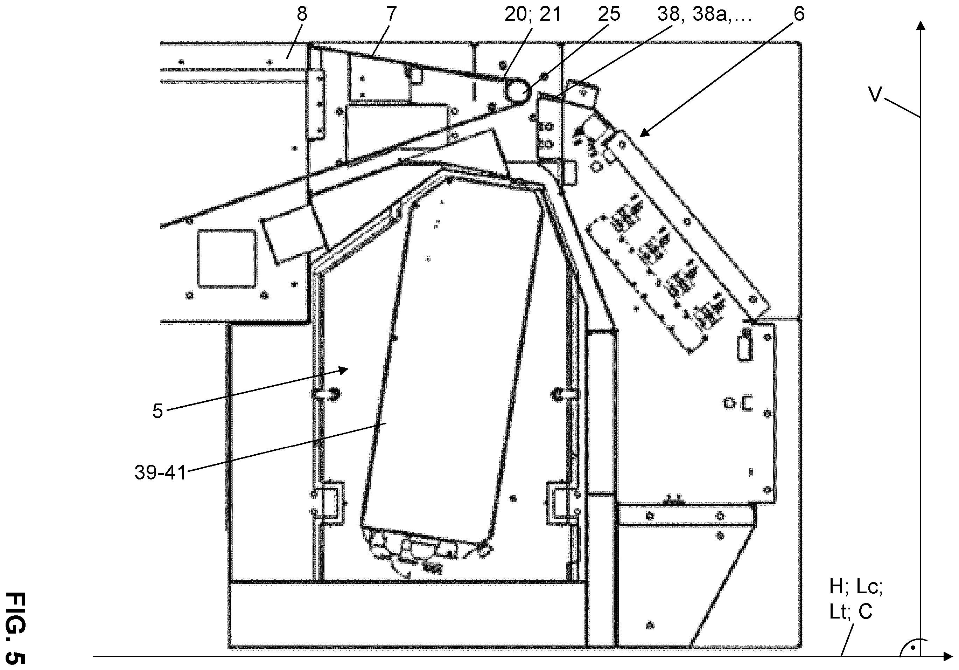

As indicated in figure 5, the sorting device 6 comprises nozzles 38, 38a, ... that are configured to eject a fluid to impart an impulse on the bulk material to discharge the bulk material from the conveyor belt 7. The analysis device 5 comprises a laser device 39, a spectrometer 40 and a controller unit 41. The laser device 39 is configured to generate a laser beam that, when the laser beam is incident on the bulk material, produces an optical emission from the bulk material. The spectrometer 40 is configured to detect the optical emission from the bulk material and to generate the detection signal based on the optical emission. The controller unit 41 is configured to receive the detection signal from the spectrometer 40 and to generate the output signal based on the detection signal and at least one sorting criterion.

The arrangement 1 comprises at least one collection device 45 being configured to receive the at least two fractions of the sorted bulk material. The collection device is preferably arranged and configured such as to collect the fractions of the sorted bulk material separately. For instance, the collection device can comprise at least two bins, and wherein each bin receives and thereby collects one of the fractions of the bulk material. As an example, and as mentioned earlier, the sorting device can be configured to eject a fluid to impart an impulse on the bulk material to discharge the bulk material from the conveyor belt and into the collection device, in particular into the bins of the collector device.

### LIST OF REFERENCE SIGNS

- 1: arrangement
- 2: feeder
- 3: transfer device
- 4: conveyor device
- 5: analysis device
- 6: sorting device
- 7, 7a, ...: conveyor belt
- 8: support device
- 9, 9a, ...: trough
- 10: groove
- 11: bottom surface of conveyor belt
- 12: top surface of conveyor belt
- 13: surface
- 14: bottom of trough
- 15: bottom of groove
- 16: sides of trough
- 17: sides of groove
- 18: initial region conveyor device
- 19: loading end
- 20: end region
- 21: discharge end
- 22: adjusting element
- 23: drive pulley
- 24: power device
- 25: tail pulley
- 26: belt tensioning device
- 27: take-up pulley
- 28: idler roller
- 29: tracking element
- 30: belt cleaning device
- 31: initial region support device
- 32: middle region support device
- 33: end region support device
- 35: profiling structure
- 36: fluid supply device
- 37: vibration device
- 38, 38a, ...: nozzles of sorting device
- 39: laser device
- 40: spectrometer
- 41: controller unit
- 42: groove of material transfer device
- 43: upper portion of material transfer device
- 44: lower portion of material transfer device
- 45: collection device
- C: conveying direction
- Ls: longitudinal direction of support device
- Lc: longitudinal direction of conveyor belt
- Ts: transverse direction of support device
- Tc: transverse direction of conveyor belt
- Tds: depth direction of support device
- Tdc: depth direction of conveyor belt
- V: vertical direction of arrangement
- H: horizontal direction of arrangement
- Wt: clear width of trough
- Wc: clear width of groove
- Dt: depth of trough
- Dc: depth of groove
- Hp: horizontal plane
- hsi: height of support device in initial region
- hsm: height of support device in middle region
- hse: height of support device in end region
- α: angle
- β: trough angle
- δ: angle
- γ: angle

## Claims

1. An arrangement (1) for analysing and sorting bulk material comprising:
- a feeder (2);
- a material transfer device (3);
- a conveyor device (4);
- an analysis device (5), and
- a sorting device (6),
wherein the feeder (2) is configured to receive the bulk material and to transport the bulk material towards the material transfer device (3),
wherein the material transfer device (3) is configured to guide the bulk material onto the conveyor device (4),
wherein the conveyor device (4) is configured to transport the bulk material towards the analysis device (5) along a conveying direction (C),
wherein the conveyor device (4) comprises at least one conveyor belt (7) and at least one support device (8),
wherein the conveyor belt (7) is configured to be supported by the support device (8) along the conveying direction (C),
wherein the analysis device (5) is configured to analyse at least one property of the bulk material and to generate at least one output signal based on the analysed property of the bulk material, and
wherein the sorting device (6) is configured to receive the at least one output signal and to sort the bulk material into at least two fractions based on the output signal and the analysed property,
**characterised in that** the support device (8) is configured as a sliding device that comprises a trough (9) extending along a longitudinal direction (Ls) of the support device (8), whereby a groove (10) is formed by the conveyor belt (7) when the conveyor belt (7) slides over the support device (8) along the conveying direction (C), and wherein the bulk material is at least partially receivable in the groove (10).

2. The arrangement (1) according to claim 1, wherein the conveyor belt (7) comprises a bottom surface (11) being directed towards the support device (8) and an opposite top surface (12), the bottom surface (11) being a smooth surface and/or the top surface (12) comprising a friction lining, and/or
wherein, at least regionally, the trough (9) comprises sides (16) that are in each case inclined at an angle (α) such, that the bulk material slides towards a center of the groove being formed between the inclined sides, a trough angle (β) between the sides preferably is 120°or less.

3. The arrangement (1) according to any one of the preceding claims, wherein the conveyor belt (7) is at least one of:
- flexible, the groove (10) preferably being formed by a flexible deformation of the conveyor belt (7),
- comprising or consisting of at least one fabric material such as cotton and/or at least one plastic such as polyester, polyurethane, or PVC,
- reinforced along a longitudinal direction (Lc) of the conveyor belt (7), for instance fiber reinforced such as comprising carbon fibers and/or Kevlar,
- lacking transverse struts extending along a transverse direction (Tc) of the conveyor belt (7) and/or lacking longitudinal struts extending along the longitudinal direction (Lc) of the conveyor belt (7).

4. The arrangement (1) according to any one of the preceding claims, wherein at least one of:
- the trough (9) extends continuously or in one or more sections along the support device (8) when seen along the longitudinal direction (Ls) of the support device (8),
- a clear width (Wt) of the trough (9) with respect to a transverse direction (Ts) of the support device (8) extending perpendicularly to the longitudinal direction (Ls) of the support device (8) is constant or varies when seen along the longitudinal direction (Ls) of the support device (8), the clear width (Wt) in a region of the material transfer device (3 and/or in a region of the sorting device (6) preferably being smaller than in a region between the material transfer device (3) and the sorting device (6) when seen along the longitudinal direction (Ls) of the support device (8), or
- a depth (Dt) of the trough (9) with respect to a depth direction (Tds) of the support device (8) is constant or varies when seen along the longitudinal direction (Ls) of the support device (8), the depth (Dt) of the trough (9) in a region of the material transfer device (3) and/or in a region of the sorting device (6) preferably being smaller than in a region between the material transfer device (3) and the sorting device (6) when seen along the longitudinal direction (Ls) of the support device (8).

5. The arrangement (1) according to any one of the preceding claims, further comprising one or more adjusting elements (22) that are configured to adjust a shape of the groove (10), in particular a clear width (Wc) of the groove (10) along the transverse direction (Tc) of the conveyor belt (7) and/or a depth (Dc) of the groove (10) along a vertical direction (V) of the arrangement (1), and
wherein the adjusting elements (22) are preferably arranged at least partially in the trough (9) and/or between the support device (8) and a bottom surface (11) of the conveyor belt (7), and/or
wherein the adjusting elements (22) are preferably wedges or rollers.

6. The arrangement (1) according to any one of the preceding claims, wherein the trough (9) is formed in the support device (8), in particular by a deformation of the support device, and/or
wherein the trough (9) and the support device (8) are a single-piece element, and/or wherein the support device (8) comprises or consists of at least one sheet metal, the sheet metal preferably comprising or consisting of at least one metal or metal alloy, and/or
wherein the support device is a multi-piece element comprising at least a first support-device-part and a second support-device part being arranged inclined with respect to one another, whereby the trough is formed.

7. The arrangement (1) according to any one of the preceding claims, wherein the conveyor device (4) comprises two or more conveyor belts (7, 7a, ...) being arranged parallel to one another with respect to the conveying direction (C), and/or
wherein the support device (8) comprises two or more troughs (9, 9a, ...) being arranged parallel to one another with respect to the conveying direction (C), and/or
wherein the conveyor device (4) comprises a single support device (8).

8. The arrangement (1) according to any one of the preceding claims, wherein the conveyor device (4) further comprises at least one of:
- at least one, preferably exactly one drive pulley (23) and being configured to drive the conveyor belt (7) along the conveying direction (C),
- at least one, preferably exactly one, power device (24) such as a motor being configured to power the drive pulley (23),
- at least one, preferably exactly one, tail pulley being (25) arranged opposite to the drive pulley (23) with respect to the conveying direction (C) of the conveyor device (4) and being configured to return the conveyor belt (7), or
- at least one belt tensioning device (26) being configured to tension the conveyor belt (7) and preferably furthermore being configured to determine a tensioning and/or speed of the conveyor belt (7) and to adjust the tension and/or speed of the conveyor belt (7) accordingly.

9. The arrangement (1) according to any one of the preceding claims, wherein the support device (8) comprises an initial region (31), a middle region (32), and an end region (33), and
wherein, when seen along the longitudinal direction (Ls) of the support device (8), the support device (8) defines a positive slope from the initial region (31) toward the middle region (32) of the support device (8) and defines a negative slope from the middle region (32) toward the end region (33) of the support device (8), and/or
wherein a height (hsm) of the support device (8) in the middle region (32) is greater than a height (hsi) of the support device (8) in the initial region (31) and/or a height (hse) of the end region (33) with respect to a vertical direction (V) of the arrangement (1).

10. The arrangement (1) according to any one of the preceding claims, wherein at least one of:
- the trough (9) of the support device (8) comprises one or more openings (34) through which at least one fluid such as air and/or a lubricating fluid can be introduced into the trough (9) and to a bottom surface (11) of the conveyor belt (7),
- the trough (9) comprises at least one profiling structure (35) in the conveying direction (C) that is configured to center the conveyor belt (7) within the trough (9),
- the arrangement (1) further comprises at least one fluid supply device (36) being configured to supply at least one fluid such as air and/or a lubricating fluid to the support device (8), or
- the arrangement (1) further comprises at least one vibration device (37) being configured to vibrate the support device (8).

11. The arrangement (1) according to any one of the preceding claims, wherein the sorting device (6) comprises nozzles (38, 38a, ...) that are configured to eject a fluid to impart an impulse on the bulk material to discharge the bulk material from the conveyor belt (7), and wherein at least one of:
- the sorting device (6) is preferably configured to supply an amount of fluid to the nozzles (38, 38a, ...) depending on a property of the bulk material, in particular a size of the bulk material, or
- the sorting device (6) is preferably configured to activate one or more nozzles (38, 38a, ...) based on a property of the bulk material, in particular a size of the bulk material.

12. The arrangement (1) according to any one of the preceding claims, wherein the analysis device (5) comprises at least one laser device (39), at least one spectrometer (40) and a controller unit (41),
wherein the laser device (39) is configured to generate a laser beam that, when the laser beam is incident on the bulk material, produces an optical emission from the bulk material,
wherein the spectrometer (40) is configured to detect the optical emission from the bulk material and to generate at least one detection signal based on the optical emission and preferably being indicative of the chemical composition of the bulk material, and
wherein the controller unit (41) is configured to receive the detection signal from the spectrometer (40) and to generate the output signal based on the detection signal and at least one sorting criterion.

13. The arrangement (1) according to any one of the preceding claims, wherein the feeder (2) is a vibration feeder, and/or
wherein the material transfer device (3) is inclined downwards when seen along the conveying direction (C) and/or comprises at least one groove (42) configured to guide the bulk material from an upper portion (43) of the material transfer device (3) to a lower portion (44) of the material transfer device (3), and/or
wherein the arrangement (1) further comprises at least one collection device (45) being configured to receive the at least two fractions of the sorted bulk material.

14. A method of sorting and analysing bulk material, preferably via the arrangement (1) as claimed in any one of the preceding claims, comprising the steps of:
- supplying bulk material to a feeder (2) being configured to receive the bulk material and transporting the bulk material towards a material transfer device (3) via the feeder (2),
- guiding the bulk material onto a conveyor device (4) via the material transfer device (3),
- transporting the bulk material towards an analysis device (5) along a conveying direction (C) via the conveyor device (4),
wherein the conveyor device (4) comprises at least one conveyor belt (7) and at least one support device (8),
wherein the conveyor belt (7) is sliding along the support device (8) along the conveying direction (C),
- analysing at least one property of the bulk material and generating at least one output signal based on the analysed property of the bulk material via an analysis device (5), and
- sorting the bulk material into at least two fractions based on the output signal and the analysed property via at least one sorting device (6),
**characterised in that** the support device (8) comprises a trough (9) extending along a longitudinal direction (Ls) of the support device (8), whereby a groove (10) is formed by the conveyor belt (7) when the conveyor belt (7) slides over the support device (8) along the conveying direction (C), and wherein the bulk material is at least partially received in the groove (10).

15. A method of manufacturing an arrangement for analysing and sorting bulk material, preferably the arrangement (1) as claimed in any one of claims 1 to 13, the method comprising:
- Providing a feeder (2);
- Providing a material transfer device (3);
- Providing a conveyor device (4);
- Providing an analysis device (5), and
- Providing a sorting device (6),
wherein the feeder (2) is configured to receive the bulk material and to transport the bulk material towards the material transfer device (3),
wherein the material transfer device (3) is configured to guide the bulk material onto the conveyor device (4),
wherein the conveyor device (4) is configured to transport the bulk material towards the analysis device (5) along a conveying direction (C),
wherein the conveyor device (4) comprises at least one conveyor belt (7) and at least one support device (8),
wherein the conveyor belt (7) is configured to slide along the support device (8) along the conveying direction (C),
wherein the analysis device (5) is configured to analyse at least one property of the bulk material and to generate at least one output signal based on the analysed property of the bulk material, and
wherein the sorting device (6) is configured to receive the at least one output signal and to sort the bulk material into at least two fractions based on the output signal and the analysed property,
**characterised in that** the support device (8) comprises a trough (9) extending along a longitudinal direction (Ls) of the support device (8), whereby a groove (10) is formed by the conveyor belt (7) when the conveyor belt (7) slides over the support device (8) along the conveying direction (C), and wherein the bulk material is at least partially receivable in the groove (10).
